# EUROPÄISCHE PATENTSCHRIFT

(11) **EP 2 183 132 B1**
(45) Veröffentlichungstag und Bekanntmachung des Hinweises auf die Patenterteilung: **29.06.2011**
(21) Anmeldenummer: 08786201.7
(22) Anmeldetag: 17.07.2008
(51) Int. Cl.: B60T 7/04, B60T 8/40

(54) **BREMSSYSTEM VOM TYP "BRAKE-BY-WIRE"**
BRAKE SYSTEM OF THE BRAKE-BY-WIRE TYPE
SYSTÈME DE FREINAGE DE TYPE "BRAKE-BY-WIRE"

(30) Priorität: 02.08.2007 DE 102007036426
(43) Veröffentlichungstag der Anmeldung: 12.05.2010
(73) Patentinhaber: Continental Teves AG & Co. oHG, 60488 Frankfurt (DE)
(72) Erfinder: DROTT, Peter, 65936 Frankfurt (DE); SELLINGER, Thomas, 63073 Offenbach (DE); VON HAYN, Holger, 61118 Bad Vilbel (DE); KRÄMER, Horst, 65462 Ginsheim-Gustavsburg (DE)
(86) Internationale Anmeldenummer: PCT/EP2008/059362
(87) Internationale Veröffentlichungsnummer: WO 2009/016040

(56) Entgegenhaltungen:
- EP-A- 1 557 333
- WO-A-2005/014351
- DE-A1- 19 836 691
- DE-A1-102004 011 622

## Beschreibung

Bremssystem vom Typ "Brake-by-wire" für ein Kraftfahrzeug, mit einem mittels eines Bremspedals betätigbaren Bremsdruckgeber, der außerhalb der Betriebsart "Brake-by-wire" mit Radbremsen des Fahrzeuges verbindbar ist, mit einer mittels einer elektronischen Steuereinheit ansteuerbaren Druckquelle, die in der Betriebsart "Brake-by-wire" mit den Radbremsen des Fahrzeuges verbindbar ist, mit Mitteln zum Erfassen eines Fahrerverzögerungswunsches, und mit einem mit dem Bremspedal zusammenwirkenden Pedalwegsimulator, der durch wenigstens ein Federelement und ein Dämpfungselement gebildet ist und durch den in der Betriebsart "Brake-by-wire" eine auf das Bremspedal wirkende Rückstellkraft unabhängig von der Ansteuerung der Druckquelle simulierbar ist und mit einer mittels der elektronischen Steuereinheit ansteuerbaren elektrohydraulischen Einrichtung, die in der Betriebsart "Brake-by-wire" ein Zuschalten und außerhalb der Betriebsart "Brake-by-wire" ein wenigstens teilweises Abschalten des Pedalwegsimulators ermöglicht.

Ein derartiges Bremssystem ist aus der WO 2005/014351-A1 oder aus der DE 10 2004 011 622 A1 bekannt und wird dort insbesondere im Zusammenhang mit Fig. 15 beschrieben. Der Pedalwegsimulator wird bei dem vorbekannten Bremssystem von einem Gehäuse aufgenommen, in das ein mit dem Bremspedal drehfest verbundenes Kraftübertragungselement ragt. Das Gehäuse des Pedalwegsimulators stützt sich dabei über einen fest mit dem Gehäuse verbundenen Hebelarm an einer elektrohydraulischen Einrichtung ab, die ein Zu- und Abschalten des Pedalwegsimulators ermöglicht und durch eine Zylinder-Kolben-Anordnung gebildet wird. Bei dieser Anordnung ist eine Lagerung des Gehäuses des Pedalwegsimulators notwendig.

Es ist daher Aufgabe der vorliegenden Erfindung, einen einfacheren Pedalwegsimulator vorzuschlagen.

Diese Aufgabe wird erfindungsgemäß durch die kennzeichnenden Merkmale des unabhängigen Patentanspruchs 1 gelöst. Dabei ist vorgesehen, dass das Dämpfungselement entweder ortsfest an einem Pedalbock angeordnet ist und mit der mit dem Bremspedal gemeinsam verschwenkbaren elektrohydraulischen Einrichtung zusammenwirkt oder mit dem Bremspedal verbundenen ist und mit der ortsfest angeordneten elektrohydraulischen Einrichtung zusammenwirkt. Durch diese Maßnahmen wird erreicht, dass kein Gehäuse für den Pedalwegsimulator und damit auch keine Lagerung für das Gehäuse benötigt wird, was zu einem Kostenvorteil führt.

Vorteilhafte Weiterbildungen und Ausgestaltungen des Erfindungsgegenstandes sind den Unteransprüchen 2 bis 13 entnehmbar.

Bei einer vorteilhaften Weiterbildung ist ein Faltenbalg vorgesehen, der das Dämpfungselement umgreift und vor Verunreinigungen schützt.

Bei einer ortsfesten Anordnung der elektrohydraulischen Einrichtung wird diese einem Pedalbock zugeordnet, während das Dämpfungselement gemeinsam mit dem Bremspedal verschwenkbar angeordnet ist.

Dabei ist vorgesehen, dass der Abstand zwischen dem Dämpfungselement und der elektrohydraulischen Einrichtung mittels einer Einstellschraube einstellbar ist. Die Einstellschraube wird von einem am Bremspedal angeordneten Gewinde aufgenommen.

Bei einer besonders vorteilhaften Ausführung des Erfindungsgegenstandes weist das Dämpfungselement eine progressive Kraft-Weg-Charakteristik auf.

Die elektrohydraulische Einrichtung wird durch eine mittels eines elektromagnetisch betätigbaren Absperrventils absperrbare Zylinder-Kolbenanordnung gebildet, deren Kolben mit dem Dämpfungselement in kraftübertragender Verbindung steht.

Dabei sieht eine Weiterbildung des Erfindungsgegenstandes vor, dass der Kolben einen hydraulischen Druckraum begrenzt, der unter Zwischenschaltung des Absperrventils mit einer Niederdruckkammer verbunden ist. Dabei ist das Absperrventil als ein stromlos offenes (SO-) Ventil ausgeführt.

Eine weitere vorteilhafte Ausbildung des erfindungsgemäßen Bremssystems sieht vor, dass der Pedalwegsimulator eine Simulatorfeder aufweist, die als Torsionsfeder ausgebildet ist und sich einerseits am Bremspedal und andererseits am Pedalbock abstützt. Bei einer Weiterbildung weist der Pedalwegsimulator eine weitere Simulatorfeder auf, die als Zugfeder ausgebildet ist.

Bei einer besonders vorteilhaften Weiterbildung ist ein einstellbarer Pedalanschlag vorgesehen, der das Abstandsmaß zwischen dem Bremspedal und der Druckquelle bestimmt.

Die Druckquelle ist durch einen sowohl mittels des Bremspedals als auch mittels der elektronischen Steuereinheit fahrerwunschabhängig betätigbaren Bremskraftverstärker sowie einen dem Bremskraftverstärker nachgeschalteten Hauptbremszylinder gebildet.

Weitere Merkmale und Vorteile der Erfindung werden in der nachfolgenden Beschreibung unter Bezugnahme auf die beiliegenden Zeichnungen an zwei Ausführungsbeispielen näher erläutert. In den Zeichnungen zeigen:
- Fig. 1: eine Schnittdarstellung des aus dem Stand der Technik bekannten Bremssystems der eingangs genannten Gattung;
- Fig. 2: eine vereinfachte schematische Darstellung der erfindungsgemäßen Anordnung der elektrohydraulischen Einrichtung des Bremssystems nach Fig. 1 und des Dämpfungselements und
- Fig. 3: eine zweite Ausführungsform der erfindungsgemäßen Anordnung.

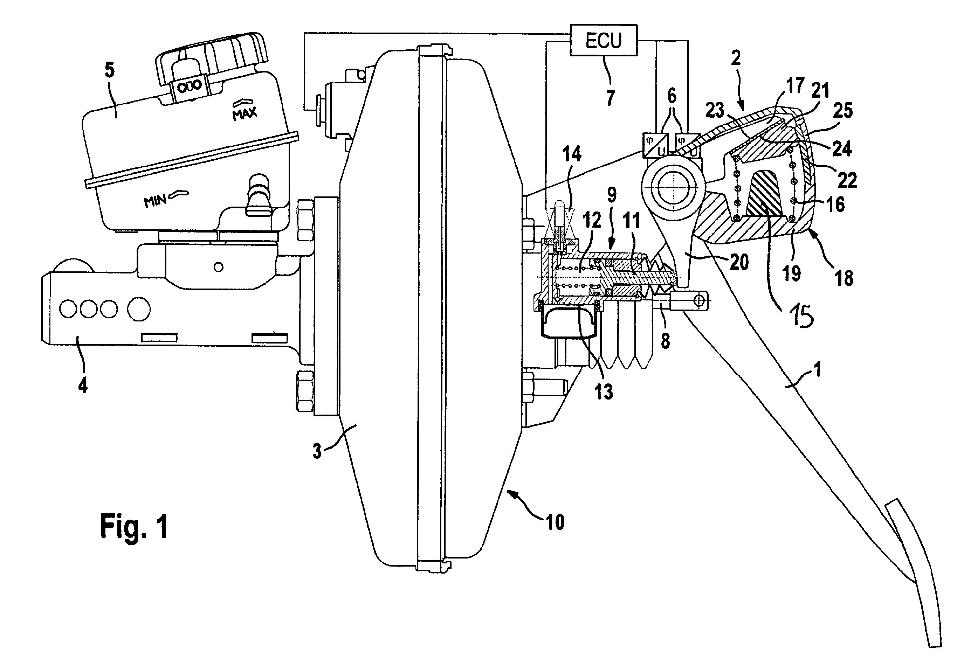

Das in Fig. 1 dargestellte Bremssystem eines Kraftfahrzeuges vom Typ "Brake-by-wire" ist aus dem Stand der Technik bekannt und besteht im Wesentlichen aus einer Bremsbetätigungseinheit 10, einem Bremspedal 1, einem Pedalwegsimulator 2, einer lediglich schematisch dargestellten elektronischen Steuereinheit 7 sowie nicht gezeigten, ggf. unter Zwischenschaltung einer hydraulischen Steuer- bzw. Regeleinheit an die Bremsbetätigungseinheit 10 angeschlossenen Radbremsen. Die Bremsbetätigungseinheit 10 wird durch einen Bremskraftverstärker, vorzugsweise einen Unterdruckbremskraftverstärker 3, einen dem Bremskraftverstärker 3 nachgeschalteten Hauptbremszylinder, vorzugsweise einem Tandemhauptzylinder 4, an dessen nicht dargestellte Druckräume die vorhin erwähnten Radbremsen des Kraftfahrzeugs angeschlossen sind, sowie einen dem Hauptbremszylinder 4 zugeordneten Druckmittelvorratsbehälter 5 gebildet. Das Bremspedal 1, das der Betätigung des Bremskraftverstärkers 3 durch den Fahrer dient, wirkt insbesondere in der Betriebsart "Brake-by-wire" mit dem Pedalwegsimulator 2 zusammen, der dem Fahrer das gewöhnliche Bremspedalgefühl vermittelt. Eine vorzugsweise redundant ausgeführte Sensoreinrichtung 6 zur Erfassung eines Fahrerverzögerungswunsches erzeugt in Abhängigkeit von der Betätigung des Bremspedals 1 Steuersignale, die der elektronischen Steuereinheit 7 zugeführt werden, durch deren Ausgangssignale u. a. ein dem Bremskraftverstärker 3 zugeordneter, nicht dargestellter Elektromagnet ansteuerbar ist, der eine vom Fahrerwillen unabhängige Betätigung eines pneumatischen Steuerventils ermöglicht, das eine Luftzufuhr zum Bremskraftverstärker 3 steuert. Ein zwischen dem Ende einer mit dem Bremspedal 1 gekoppelten Kolbenstange 8 und einem Steuerkolben des vorhin genannten Steuerventils vorgesehener axialer Spalt gewährleistet in der Betriebsart "Brake-by-wire" eine Entkopplung der kraftübertragenden Verbindung zwischen dem Bremspedal 1 und dem Bremskraftverstärker 3.

Der Pedalwegsimulator 2, durch den, wie bereits erwähnt, in der Betriebsart "Brake-by-wire" eine auf das Bremspedal wirkende Rückstellkraft unabhängig von einer Betätigung des Bremskraftverstärkers 3 simulierbar ist, ist derart ausgeführt, dass er in der Betriebsart "Brake-by-wire" bei der Entkopplung der kraftübertragenden Verbindung zwischen dem Bremspedal 1 und dem Bremskraftverstärker 3 zuschaltbar und außerhalb der Betriebsart "Brake-by-wire" abschaltbar ist. Das Zu- sowie das Abschalten des Pedalwegsimulators 2 erfolgt durch eine elektrohydraulische Einrichtung 9, die im Wesentlichen durch eine mittels eines elektromagnetisch betätigbaren Absperrventils 14 absperrbare hydraulische Zylinder-Kolbenanordnung 11, 12 gebildet ist. Die Zylinder-Kolbenanordnung 11, 12 weist einen von einem Kolben 11 begrenzten hydraulischen Druckraum 12 sowie eine mit dem Druckraum 12 in Verbindung stehende hydraulische Niederdruckkammer 13 auf, wobei das Absperrventil 14 das Absperren bzw. das Freigeben der Verbindung ermöglicht. Das Absperrventil 14, das mittels der Ansteuersignale der elektronischen Steuereinheit 7 betätigbar bzw. umschaltbar ist, ist als ein elektromagnetisch betätigbares, stromlos offenes (SO-) 2/2-Wegeventil ausgebildet. Dem Druckausgleich zwischen Druckraum 12 und Niederdruckkammer 13 dient ein zum Druckraum 12 hin öffnendes Rückschlagventil, das in Fig. 1 nicht dargestellt ist.

Bei der aus dem Stand der Technik vorbekannten Anordnung weist der Pedalwegsimulator eine Druckfeder 16 auf, die zwischen dem Bremspedal 1 bzw. einem mit dem Bremspedal 1 drehfest verbundenen Kraftübertragungsteil 17 und einem zweiarmigen Hebel 18 eingespannt ist. Der zweiarmige Hebel 18 ist gegenüber dem Bremspedal 1 koaxial mit diesem versetzt begrenzt drehbar gelagert, wobei sein erster Arm 19 eine Abstützfläche für die Druckfeder 16 bildet, während sich sein zweiter Arm 20 am hydraulischen Kolben 11 der Kolben-Zylinderanordnung 9 abstützt.

An dem vorhin erwähnten Kraftübertragungsteil 17 liegt bei der vorbekannten Anordnung unter der Wirkung der Simulatorfeder 16 ein Reibglied 21 an. Das Reibglied 21 wirkt mit einer Reibfläche 22 zusammen. Die Anlage des Reibglieds 21 am Kraftübertragungsteil 17 erfolgt mittels schräg angeordneter Anlageflächen 23, 24 derart, dass bei der Betätigung des Pedalwegsimulators 2 eine Kraftkomponente entsteht, die das Reibglied 21 gegen die Reibfläche 22 drückt. Die vorhin genannten Elemente 16, 17, 21, 22 sind vorzugsweise in einem Gehäuse 25 angeordnet, das vorzugsweise einteilig mit dem ersten Arm 19 des zweiarmigen Hebels 18 ausgebildet ist.

Die Funktionsweise des oben beschriebenen Bremssystems ist dem auf dem technischen Gebiet von "Brake-by-wire"-Systemen tätigen Fachmann bekannt. In der in Fig. 1 dargestellten Ruhestellung des Bremssystems, die auch der Rückfallebene entspricht, ist der hydraulische Druckraum 12 der elektrohydraulischen Einrichtung 9 über das stromlos offene Absperrventil 14 mit der Niederdruckkammer 13 verbunden. Bei der Betätigung des Bremspedals 1 wird seine Bewegung durch die Sensoreinrichtung 6 erfasst und der elektronischen Steuereinheit 7 gemeldet, die gleichzeitig Steuersignale zum Ansteuern des vorhin erwähnten Elektromagneten sowie des Absperrventils 14 erzeugt, so dass die Verbindung zwischen dem Druckraum 12 und der Niederdruckkammer 13 unterbrochen wird, wodurch der Pedalwegsimulator 2 zugeschaltet wird.

Bei einem Ausfall der Fahrzeugelektronik bzw. einem Bordnetzausfall kann das Absperrventil 14 nicht umgeschaltet werden, so dass die Bremsung in der Rückfallebene erfolgt. Bei der Betätigung des Bremspedals 1 dreht sich der zweiarmige Hebel 18 unter der Wirkung der Simulatorfeder 16 mit dem Bremspedal 1 mit, so dass der Kolben 11 der elektrohydraulischen Einrichtung 9 in der Zeichnung nach links verschoben wird und das Druckmittel aus dem Druckraum 12 in die Niederdruckkammer 13 verschiebt. Der Simulator 2 ist abgeschaltet.

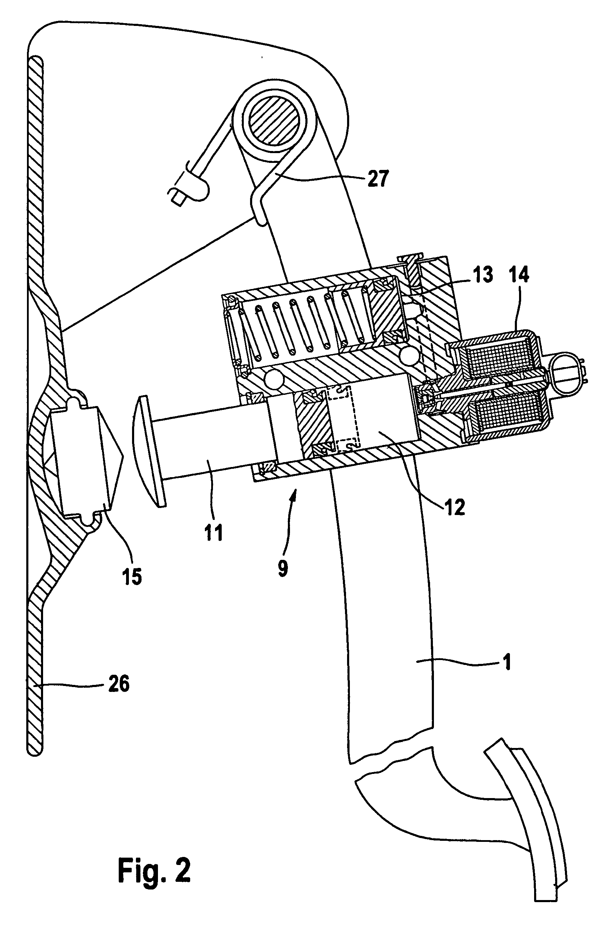

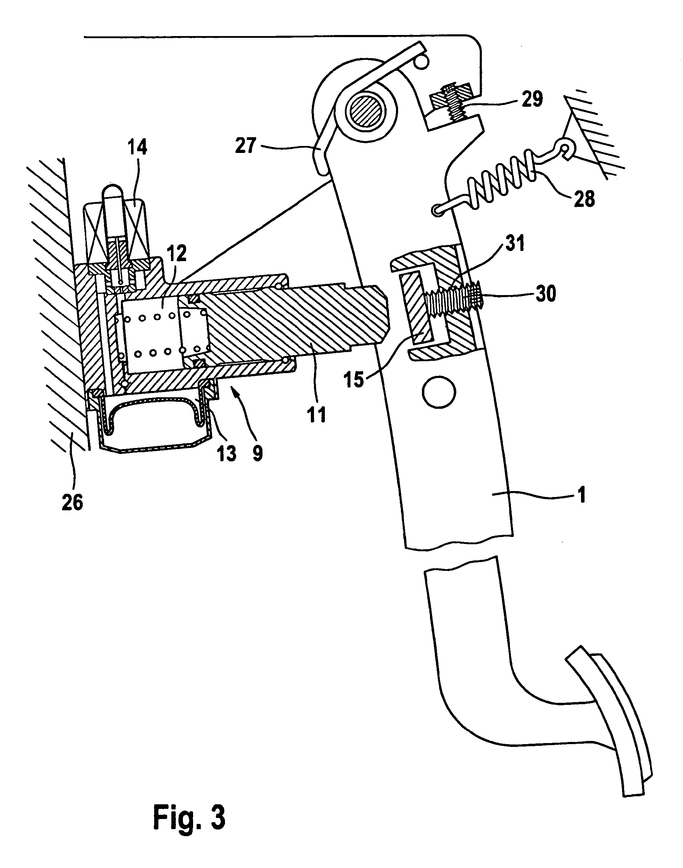

Um einen einfacheren Pedalwegsimulator 2 darzustellen, bei dem auf das Gehäuse 25 verzichtet werden kann, ist erfindungsgemäß vorgesehen, dass entweder die elektrohydraulische Einrichtung 9 zum Zu- und Abschalten der Simulatorwirkung mit dem Bremspedal 1 verbunden ist und mit diesem gemeinsam verschwenkbar angeordnet ist, während das Dämpfungselement 15 ortsfest an einem Pedalbock 26 angebracht ist, oder dass das Dämpfungselement 15 am Bremspedal 1 angeordnet ist, während die elektrohydraulische Einrichtung 9 ortsfest am Pedalbock 26 angebracht ist. Die erstgenannte Ausführung ist in Fig. 2 dargestellt und die dazu alternative Ausführung in Fig. 3.

Bei der in Fig. 2 dargestellten Anordnung ist also das Dämpfungselement 15 an einem Pedalbock 26 ortsfest angeordnet. Ein nicht dargestellter Faltenbalg wird über das Dämpfungselement 15 gestülpt um dieses vor Verunreinigungen zu schützen. Die elektrohydraulische Einrichtung 9 ist mit dem Bremspedal 1 verbunden und vollzieht dessen Schwenkbewegungen mit. Bei einer Betätigung des Bremspedals 1 stützt sich der Kolben 11 am Dämpfungselement 15 ab und im "Brake-by-Wire"-Betrieb wird das stromlos offene Absperrventil 14 geschlossen, sodass der Kolben 11 gegen das Dämpfungselement 15 gepresst wird. Das Dämpfungselement 15 weist eine progressive Kraft-Weg-Charakteristik auf. In der Rückfallebene bleibt das Absperrventil 14 offen und das Druckmittel kann bei einer Betätigung des Bremspedals 1 vom Zylinder 12 in den Niederdruckspeicher 13 gelangen, sobald der Kolben 11 zur Anlage an das Dämpfungselement 15 gelangt. In der Rückfallebene wird also keine Betätigungskraft des Fahrzeugführers vom Dämpfungselement 15 absorbiert.

Wie Fig. 2 weiterhin entnehmbar ist, wird ein Teil der Simulatorwirkung von der Simulatorfeder 27 aufgebracht, die als Torsionsfeder 27 ausgebildet ist und sich einerseits am Bremspedal 1 und andererseits am Pedalbock 26 abstützt. Die Wirkung der Feder 27 ist auch in der Rückfallebene nicht abschaltbar.

In Fig. 3 ist eine alternative Ausführungsform zur in Fig. 2 dargestellten Ausführung dargestellt. Die elektrohydraulische Einrichtung 9 ist ortsfest am Pedalbock 26 angebracht, während das Dämpfungselement 15 am Bremspedal 1 angeordnet ist und mit diesem gemeinsam die Schwenkbewegungen des Bremspedals 1 vollzieht. Der Abstand zwischen dem Dämpfungselement 15 und dem Kolben 11 der elektrohydraulischen Einrichtung ist dabei mit Hilfe einer Einstellschraube 30, die mit einem am Bremspedal angeordneten Gewinde 31 zusammenwirkt, einstellbar. Bei einer Betätigung des Bremspedals 1 gelangt das Dämpfungselement 15 zur Anlage an den Kolben 11. Neben dem Dämpfungselement 15 und der Torsionsfeder 27 ist eine Zugfeder 28 vorgesehen, die zusätzlich zur Pedalwegsimulation dient. Die Zugfeder 28 ist einerseits in eine Bohrung am Bremspedal eingehängt und ist andererseits mit dem Pedalbock 26 oder der Karosserie des Fahrzeugs verbunden.

Darüber hinaus ist in Fig. 3 ein mittels einer Schraube einstellbarer Pedalanschlag 29 dargestellt, der das Abstandsmaß zwischen dem Bremspedal 1 und dem Bremskraftverstärker 3 bestimmt.

Beide in den Fig. 2 und 3 dargestellten Ausführungen sind aufgrund des einfachen Aufbaus des Pedalwegsimulators 2 vorteilhaft im Hinblick auf eine vereinfachte Montage und eine damit verbundene Kostenreduzierung.

## Patentansprüche

1. Bremssystem vom Typ "Brake-by-wire" für ein Kraftfahrzeug, mit
a) einem mittels eines Bremspedals (1) betätigbaren Bremsdruckgeber (3, 4), der außerhalb der Betriebsart "Brake-by-wire" mit Radbremsen des Fahrzeuges verbindbar ist,
b) einer mittels einer elektronischen Steuereinheit (7) ansteuerbaren Druckquelle (3, 4, 5), die in der Betriebsart "Brake-by-wire" mit den Radbremsen des Fahrzeuges verbindbar ist,
c) Mitteln (6) zum Erfassen eines Fahrerverzögerungswunsches,
d) einem mit dem Bremspedal (1) zusammenwirkenden Pedalwegsimulator (2), der durch wenigstens ein Federelement (16, 27) und ein Dämpfungselement (15) gebildet ist und durch den in der Betriebsart "Brake-by-wire" eine auf das Bremspedal (1) wirkende Rückstellkraft unabhängig von der Ansteuerung der Druckquelle simulierbar ist und
e) einer mittels der elektronischen Steuereinheit (7) ansteuerbaren elektrohydraulischen Einrichtung (9), die in der Betriebsart "Brake-by-wire" ein Zuschalten und außerhalb der Betriebsart "Brake-by-wire" ein wenigstens teilweises Abschalten des Pedalwegsimulators (2) ermöglicht,
**dadurch gekennzeichnet, dass** das Dämpfungselement (15) entweder ortsfest an einem Pedalbock (26) angeordnet ist und mit der mit dem Bremspedal (1) gemeinsam verschwenkbaren elektrohydraulischen Einrichtung (9) zusammenwirkt oder mit dem Bremspedal verbundenen ist und mit der ortsfest angeordneten elektrohydraulischen Einrichtung (9) zusammenwirkt .

2. Bremssystem nach Anspruch 1, **dadurch gekennzeichnet, dass** ein Faltenbalg vorgesehen ist, der das Dämpfungselement (15) umgreift und vor Verunreinigungen schützt.

3. Bremssystem nach Anspruch 1, **dadurch gekennzeichnet, dass** die elektrohydraulische Einrichtung (9) bei einer ortsfesten Anordnung einem Pedalbock (26) zugeordnet wird, während das Dämpfungselement (15) gemeinsam mit dem Bremspedal (1) verschwenkbar angeordnet ist.

4. Bremssystem nach Anspruch 3, **dadurch gekennzeichnet, dass** der Abstand zwischen dem Dämpfungselement (15) und der elektrohydraulischen Einrichtung (9) mittels einer Einstellschraube (30) einstellbar ist.

5. Bremssystem nach Anspruch 4, **dadurch gekennzeichnet, dass** die Einstellschraube (30) von einem am Bremspedal (1) angeordneten Gewinde (31) aufgenommen wird.

6. Bremssystem nach einem der vorhergehenden Ansprüche, **dadurch gekennzeichnet, dass** das Dämpfungselement (15) eine progressive Kraft-Weg-Charakteristik aufweist.

7. Bremssystem nach einem der vorhergehenden Ansprüche, **dadurch gekennzeichnet, dass** die elektrohydraulische Einrichtung durch eine mittels eines elektromagnetisch betätigbaren Absperrventils (14) absperrbare Zylinder-Kolbenanordnung (9) gebildet wird, deren Kolben (11) mit dem Dämpfungselement (15) in kraftübertragender Verbindung steht.

8. Bremssystem nach Anspruch 7, **dadurch gekennzeichnet, dass** der Kolben (11) einen hydraulischen Druckraum (12) begrenzt, der unter Zwischenschaltung des Absperrventils (14) mit einer Niederdruckkammer (13) verbunden ist.

9. Bremssystem nach Anspruch 7 oder 8, **dadurch gekennzeichnet, dass** das Absperrventil (14) als ein stromlos offenes (SO-) Ventil ausgeführt ist.

10. Bremssystem nach einem der vorhergehenden Ansprüche, **dadurch gekennzeichnet, dass** der Pedalwegsimulator (2) eine Simulatorfeder (27) aufweist, die als Torsionsfeder ausgebildet ist und sich einerseits am Bremspedal (1) und andererseits am Pedalbock (26) abstützt.

11. Bremssystem nach Anspruch 10, **dadurch gekennzeichnet, dass** der Pedalwegsimulator (2) eine weitere Simulatorfeder (28) aufweist, die als Zugfeder ausgebildet ist.

12. Bremssystem nach einem der vorher gehenden Ansprüche, **dadurch gekennzeichnet, dass** ein einstellbarer Pedalanschlag (29) vorgesehen ist, der das Abstandsmaß zwischen dem Bremspedal (1) und der Druckquelle (3, 4, 5) bestimmt.

13. Bremssystem nach einem der vorher gehenden Ansprüche **dadurch gekennzeichnet, dass** die Druckquelle durch einen sowohl mittels des Bremspedals (1) als auch mittels der elektronischen Steuereinheit (7) fahrerwunschabhängig betätigbaren Bremskraftverstärker (3) sowie einen dem Bremskraftverstärker (3) nachgeschalteten Hauptbremszylinder (4) gebildet ist.

## Claims

1. Brake system of the brake-by-wire type for a motor vehicle having
a) a brake pressure signal generator (3, 4) which can be activated by means of a brake pedal (1) and can be connected to wheel brakes of the vehicle outside the brake-by-wire operating mode,
b) a pressure source (3, 4, 5) which can be actuated by means of an electronic control unit (7) and can be connected to the wheel brakes of the vehicle in the brake-by-wire operating mode,
c) means (6) for sensing a driver's deceleration request,
d) a pedal travel simulator (2) which interacts with the brake pedal (1), is formed by at least one spring element (16, 27) and a damping element (15) and by means of which a restoring force acting on the brake pedal (1) can be simulated in the brake-by-wire operating mode independently of the actuating of the pressure source, and
e) an electrohydraulic device (9) which can be actuated by means of the electronic control unit (7) and which permits activation of the pedal travel simulator (2) in the brake-by-wire operating mode and at least partial deactivation of the pedal travel simulator (2) outside the brake-by-wire operating mode,
**characterized in that** the damping element (15) is either arranged in a positionally fixed fashion on a pedal block (26) and interacts with the electrohydraulic device (9) which is capable of pivoting together with the brake pedal (1), or is connected to the brake pedal and interacts with the electrohydraulic device (9) which is arranged in a positionally fixed fashion.

2. Brake system according to Claim 1, **characterized in that** a folding bellows is provided which engages around the damping element (15) and protects it against soiling.

3. Brake system according to Claim 1, **characterized in that**, when there is a positionally fixed arrangement, the electrohydraulic device (9) is assigned to a pedal block (26) while the damping element (15) is arranged so as to be capable of pivoting together with the brake pedal (1).

4. Brake system according to Claim 3, **characterized in that** the distance between the damping element (15) and the electrohydraulic device (9) can be adjusted by means of an adjustment screw (30).

5. Brake system according to Claim 4, **characterized in that** the adjustment screw (30) is received by a thread (31) which is arranged on the brake pedal (1).

6. Brake system according to one of the preceding claims, **characterized in that** the damping element (15) has a progressive force/travel characteristic.

7. Brake system according to one of the preceding claims, **characterized in that** the electrohydraulic device is formed by a cylinder-piston arrangement (9) which can be shut off by means of an electromagnetically activated check valve (14) and whose piston (11) is connected in a force-transmitting fashion to the damping element (15).

8. Brake system according to Claim 7, **characterized in that** the piston (11) bounds a hydraulic pressure space (12) which is connected to a low-pressure chamber (13) with intermediate connection of the check valve (14).

9. Brake system according to Claim 7 or 8, **characterized in that** the check valve (14) is embodied as a valve which is open in the currentless state.

10. Brake system according to one of the preceding claims, **characterized in that** the pedal travel simulator (2) has a simulator spring (27) which is embodied as a torsion spring and which is supported on the brake pedal (1) at one end and on the pedal block (26) at the other.

11. Brake system according to Claim 10, **characterized in that** the pedal travel simulator (2) has a further simulator spring (28) which is embodied as a tension spring.

12. Brake system according to one of the preceding claims, **characterized in that** an adjustable pedal stop (29) is provided which determines the value of the distance between the brake pedal (1) and the pressure source (3, 4, 5).

13. Brake system according to one of the preceding claims, **characterized in that** the pressure source is formed by a brake booster (3) which can be activated either by means of the brake pedal (1) or in accordance with the driver's request by means of the electronic control unit (7), and a master brake cylinder (4) which is connected downstream of the brake booster (3).

## Revendications

1. Système de freinage du type "freinage par fil" pour véhicule automobile, présentant
a) un détecteur (3, 4) de pression de freinage apte à être actionné au moyen d'une pédale de frein (1) et qui peut être relié hors du mode de fonctionnement "freinage par fil" aux freins des roues du véhicule,
b) une source de pression (3, 4, 5) qui peut être commandée au moyen d'une unité électronique de commande (7) et qui peut être reliée aux freins des roues du véhicule dans le mode de fonctionnement "freinage par fil",
c) des moyens (6) de détection d'un souhait de ralentissement exprimé par le conducteur,
d) un simulateur (2) de course de pédale qui coopère avec la pédale de frein (1), qui est formé par au moins un élément élastique (16, 27) et un élément d'amortissement (15) et qui permet de simuler une force de rappel qui agit sur la pédale de frein (1) dans le mode de fonctionnement "freinage par fil", indépendamment de la commande de la source de pression et
e) un dispositif électro-hydraulique (9) qui peut être commandé au moyen de l'unité électronique de commande (7) et qui permet dans le mode de fonctionnement "freinage par fil" un branchement du simulateur (2) de course de pédale et hors du mode de fonctionnement "freinage par fil" un débranchement au moins partiel de ce dernier,
**caractérisé en ce que**
l'élément d'amortissement (15) est disposé fixement sur un chevalet de pédale (26) et coopère avec le dispositif électro-hydraulique (9) qui peut pivoter en même temps que la pédale de frein (1) ou est relié à la pédale de frein et coopère avec le dispositif électro-hydraulique (9) disposé fixement.

2. Système de freinage selon la revendication 1, **caractérisé en ce qu'**il présente un soufflet en accordéon qui englobe l'élément d'amortissement (15) et le protège des impuretés.

3. Système de freinage selon la revendication 1, **caractérisé en ce que** lorsque le dispositif électro-hydraulique (9) est disposé en position fixe, il est associé, à un chevalet de pédale (26), tandis que l'élément d'amortissement (15) est disposé à pivotement commun avec la pédale de frein (1).

4. Système de freinage selon la revendication 3, **caractérisé en ce que** la distance entre l'élément d'amortissement (15) et le dispositif électro-hydraulique (9) peut être ajustée au moyen d'une vis d'ajustement (30).

5. Système de freinage selon la revendication 4, **caractérisé en ce que** la vis d'ajustement (30) est reprise dans un filet (31) disposé sur la pédale de frein (1).

6. Système de freinage selon l'une des revendications précédentes, **caractérisé en ce que** l'élément d'amortissement (15) présente une caractéristique force-course progressive.

7. Système de freinage selon l'une des revendications précédentes, **caractérisé en ce que** le dispositif électro-hydraulique est formé par un ensemble (9) de cylindre et piston qui peut être bloqué au moyen d'une soupape de blocage (14) actionnée par voie électromagnétique et dont le piston (11) communique avec l'élément d'amortissement (15) de manière à transférer les forces.

8. Système de freinage selon la revendication 7, **caractérisé en ce que** le piston (11) délimite un espace (12) sous pression hydraulique qui est relié à une chambre (13) à basse pression par l'intermédiaire de la soupape de blocage (14).

9. Système de freinage selon la revendication 7 ou 8, **caractérisé en ce que** la soupape de blocage (14) est configurée sous la forme d'une soupape ouverte en l'absence de courant (SO).

10. Système de freinage selon l'une des revendications précédentes, **caractérisé en ce que** le simulateur (2) de course de pédale présente un ressort de simulateur (27) configuré comme ressort de torsion qui s'appuie d'une part sur la pédale de frein (1) et d'autre part sur le chevalet de pédale (26).

11. Système de freinage selon la revendication 10, **caractérisé en ce que** le simulateur (2) de course de pédale présente un autre ressort de simulateur (28) configuré comme ressort de traction.

12. Système de freinage selon l'une des revendications précédentes, **caractérisé en ce qu'**il présente une butée ajustable de pédale (29) qui définit la distance entre la pédale de frein (1) et la source de pression (3, 4, 5).

13. Système de freinage selon l'une des revendications précédentes, **caractérisé en ce que** la source de pression est formée par un amplificateur (3) de force de freinage qui peut être actionné à la fois au moyen de la pédale de frein (1) et au moyen de l'unité électronique de commande (7) en fonction des souhaits du conducteur, ainsi que par un cylindre principal de frein (4) raccordé en aval de l'amplificateur (3) de force de freinage.
